# EUROPÄISCHE PATENTSCHRIFT

(11) **EP 0 877 874 B1**
(45) Veröffentlichungstag und Bekanntmachung des Hinweises auf die Patenterteilung: **29.08.2001**
(21) Anmeldenummer: 97953678.6
(22) Anmeldetag: 07.11.1997
(51) Int. Cl.: F16G 13/00

(54) **KETTENGLIED FÜR ENERGIEFÜHRUNGSKETTEN**
CHAIN LINK FOR ENERGY SUPPLY CHAINS
MAILLON DE CHAINE DE TRANSMISSION D'ENERGIE

(30) Priorität: 14.11.1996 DE 19647080
(43) Veröffentlichungstag der Anmeldung: 18.11.1998
(73) Patentinhaber: Murrplastik System-Technik GmbH, 71567 Oppenweiler (DE)
(72) Erfinder: EHMANN, Bruno, D-73563 Mögglingen (DE); FUNK, Rainer, D-71543 Wüstenrot (DE)
(74) Vertreter: Jeck, Anton, Dipl.-Ing.
(86) Internationale Anmeldenummer: EP9706201
(87) Internationale Veröffentlichungsnummer: WO9821502

(56) Entgegenhaltungen:
- EP-A- 0 308 958
- DE-A- 3 531 066
- DE-A- 4 225 016
- DE-C- 3 408 912
- DE-C- 3 516 448
- DE-C- 3 812 559
- US-A- 4 807 432

## Beschreibung

Die Erfindung betrifft ein Kettenglied für Energieführungsketten nach dem Oberbegriff des Anspruchs 1.

Bei herkömmlichen Kettengliedern der eingangs genannten Art, wie sie z.B. in den Druckschriften US-A 4 807 432, DE 42 25 016 A1, DE 34 08 912 C1, DE 35 16 448 C1 beschrieben sind, haben die Querstege im Bereich ihrer freien Enden Rastmittel, die in Aufnahmen der Seitenlaschen bringbar und mit diesen verrastbar sind. Diese Aufnahmen sind zur Deck- beziehungsweise Bodenseite der Seitenlasche zumindest teilweise offen, so daß die Endstücke in die Aufnahmen von oben eingesteckt beziehungsweise geschoben werden können. Die nach oben beziehungsweise unten zu offenen Aufnahmen vereinfachen zwar das Verbinden des Querstegs mit den Seitenlaschen, führen aber regelmäßig dazu, daß bei Belastung des Querstegs die Seitenlasche im deckseitigen Bereich der Aufnahme beschädigt werden und brechen bzw. sich von den Laschen lösen. Abhilfe kann teilweise dadurch geschaffen werden, daß die Seitenlaschen im Aufnahmebereich mit einer größeren Wandstärke versehen werden, was allerdings aus spritztechnischen Gründen nicht unbedingt vorteilhaft ist. Darüber hinaus ist diese Maßnahme mit einem höheren Materialaufwand verbunden.

Ferner sind in der DE 35 31 066 A1 und der EP 0 308 958 B1 Kettenglieder offenbart, deren Laschen aufeinander zu und in den Innenraum der Kette gerichtete Vorsprünge aufweisen, die mit entsprechenden Ausnehmungen der Querstege betrieblich verbindbar sind. Schließlich zeigt die DE 38 12 559 C1 eine Energieführungskette, deren Laschen Bohrungen aufweisen, in die stangenförmige Stege steckbar und mittels Schrauben in ihrer Lage gehalten sind. Hierdurch kann zwar eine hohe Stabilität des Kettengliedes erreicht und das Ausbrechen der Laschenaufnahmen praktisch vermieden werden. Dies wird allerdings auf Kosten eines zusätzlichen konstruktiven Aufwandes und weiterer Bauteile erreicht, was unerwünscht ist.

Ausgehend von dem obigen Stand der Technik liegt der Erfindung die Aufgabe zugrunde, das gattungsgemäße Kettenglied - wie beispielsweise in der DE-A-3 516 448 beschrieben - ohne unangemessenen konstruktiven Aufwand so weiterzubilden, daß eine funktionsgerechte Verbindung der Querstege mit den Seitenlaschen mit einfachsten Mitteln möglich ist und eine Beschädigung der Seitenlaschen verhindert wird.

Die gestellte Aufgabe wird erfindungsgemäß durch die Merkmale des Anspruchs 1 gelöst.

Der tragende Gedanke der Erfindung macht sich die Tatsache zunutze, daß die regelmäßig aus Kunststoff bestehenden Seitenlaschen und Querstege, die allerdings z.B. auch aus Metall sein können, Herstellungstoleranzen und/oder eine gewisse Elastizität aufweisen, die zur Herstellung einer betriebsgemäßen Verbindung zwischen den Laschen und den Querstegen genutzt wird. Die Verbindung zwischen zwei Seitenlaschen und dem ersten Quersteg erfolgt auch hier problemlos, zumal die drei Teile miteinander in üblicher Weise verbunden werden können. Der letzte Teil, nämlich der obere Quersteg, wird zunächst mit der einen Seitenlasche wie üblich verbunden. Daraufhin wird die andere Seitenlasche, die mit dem unteren Quersteg bereits verbunden ist, um einige mm seitlich nach außen verschwenkt oder gebogen, so daß das freie Ende des oberen Querstegs entlang der Innenwand dieser Seitenlasche geführt werden kann, bis es im Bereich der zugeordneten Aufnahme bzw. des Vorsprungs der Seitenlasche angeordnet ist. In dieser Position wird die nach außen gedrückte bzw. ausgeschwenkte Seitenlasche in entgegengesetzte Richtung gedrückt bzw. freigegeben, d.h. die Seitenlasche entspannt sich und es wirken keine äußeren Kräfte mehr auf sie, so daß sie in etwa parallel zur anderen Seitenlasche verläuft und das freie Ende des Quersteges mit dem Verbindungsmittel verbindet. Besonders vorteilhaft ist es, die Verbindungsmittel nach Art Aufnahme/Vorsprung zu wählen, wobei die Steckrichtung dieser Teile vorzugsweise parallel zur Erstreckung des Querstegs verläuft. Bei Aufnahmen als Verbindungsmittel ist die Länge des Querstegs größer als der lichte Abstand zwischen den entspannten Laschen. Sind jedoch Vorsprünge als Verbindungsmittel gewählt, dann ist die Länge des Quersteges größer als der Abstand der Vorsprünge voneinander.Die vorgeschlagenen Maßnahmen sind von der Größe der Kettenglieder unabhängig.

Weitere zweckmäßige und vorteilhafte Ausgestaltungen der Erfindung gehen aus den Unteransprüchen hervor.

Eine besonders zweckmäßige Ausgestaltung der Erfindung sieht vor, daß das Quersteg-Ende sich an der Wand-Partie über seine ganze Breite abstützt. Dabei können diese Maßnahmen auch so getroffen sein, daß das Quersteg-Ende mit der Aufnahme zumindest im Bereich der Wand-Partie formschlüssig verbindbar ist. Durch die formschlüssige Verbindung ist gewährleistet, daß die miteinander verbundenen Teile sich so verhalten, als wären sie aus einem Stück. Somit wird auch das Spiel zwischen den einzelnen Kettenteilen minimiert.

Eine weitere zweckmäßige Ausgestaltung der Erfindung sieht vor, daß der Quersteg mit der Lasche mittels Rastkörper verbindbar ist. Durch diese Maßnahme wird sichergestellt, daß auch bei extremen Innenbelastungen der Seitenlaschen es nicht zum ungewollten Lösen der zwischen den Seitenlaschen und den Querstegen hergestellten Verbindungen kommt. Im Rahmen dieses Erfindungsgedankens sieht eine zweckmäßige Ausgestaltung vor, daß die Rastkörper als Rastvorsprünge und -ausnehmungen ausgebildet sind und somit die Bewegungen des Querstegs in seiner Längsrichtung festlegen bzw. verhindern. Dabei können die Rastvorsprünge elastisch verformbar und quer zu den Querstegen verschwenkbar sein. Um die Verbindung zwischen dem Rastvorsprung und der -ausnehmung funktionell zu optimieren, sieht eine zweckmäßige Ausgestaltung der Erfindung vor, daß der Rastvorsprung einen parallel zum Quersteg verlaufenden Abschnitt aufweist, der eine in etwa senkrecht zum Quersteg verlaufende Nase trägt, die in eine entsprechende Ausnehmung des Querstegs eingreift und sich in dieser in Zugrichtung des Querstegs abstützt. Die Querstege werden regelmäßig durch die aufgenommene Energieleiter belastet, die aufgrund ihres Gewichtes bestrebt sind, die Querstege nach außen zu drücken. Da die Enden der Querstege in den vorzugsweise umfangseitig geschlossenen Aufnahmen angeordnet sind, werden in diesem Bereich auf die Enden insbesondere Zugkräfte ausgeübt, die durch die vorgeschlagenen Rastvorsprünge und -ausnehmungen optimal aufgefangen werden. Ferner ist vorgesehen, daß die Ausnehmungen eine in etwa senkrecht zur Längsachse des Querstegs verlaufende Innenwand aufweisen, die mit einer hierzu parallelen Fläche der Nase in Druckverbindung bringbar ist. Um den Quersteg von der Lasche lösen zu können, sieht eine zweckmäßige Ausgestaltung der Erfindung vor, daß im Ende des Querstegs eine in die Ausnehmung mündende Öffnung zum Betätigen des Rastvorsprungs ausgebildet ist.

Ein Ausführungsbeispiel der Erfindung ist in der Zeichnung schematisch dargestellt und wird im folgenden näher erläutert. Es zeigen
- Fig. 1: ein Kettenglied,
- Fig. 2 bis 4: die Herstellung einer Verbindung zwischen einem Quersteg und einer Seitenlasche,
- Fig. 5: einen Quersteg in Seitenansicht,
- Fig. 6: den in Fig. 5 dargestellten Quersteg in Richtung des Pfeiles VI und
- Fig. 7: den mit VII bezeichneten Teil nach Fig. 1 vergrößert dargestellt.

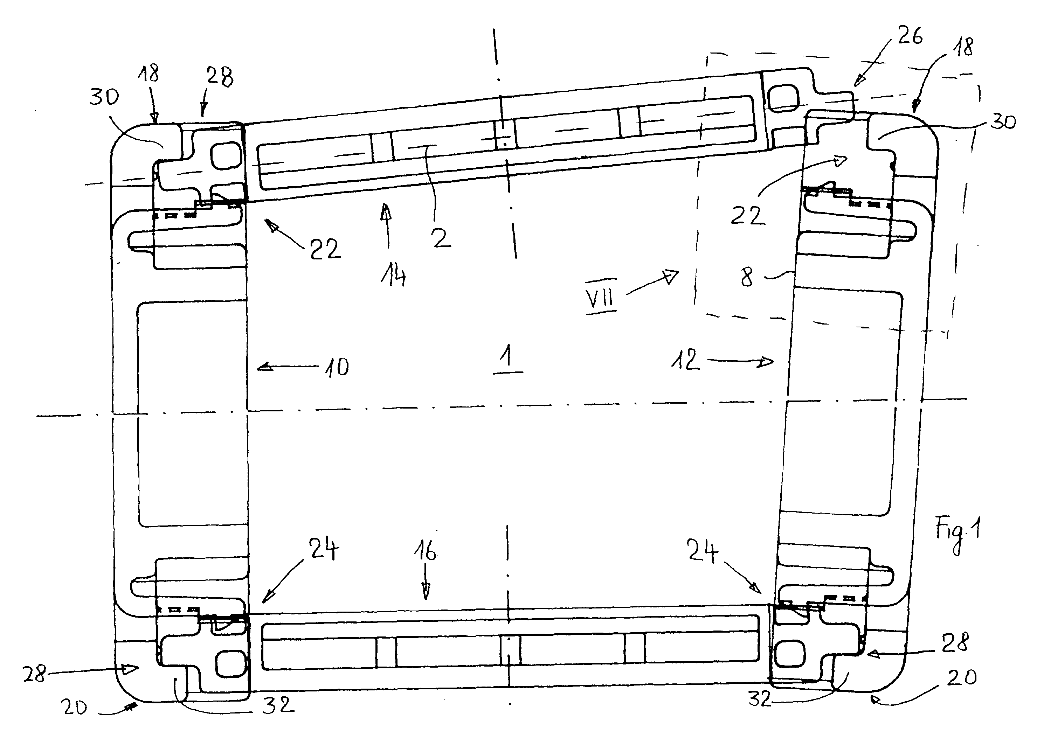

Das in den Fig. 1 bis 4 dargestellte Kettenglied ist für Energieführungsketten zur Aufnahme von Schläuchen, Kabeln oder dergleichen vorgesehen. Eine derartige Energieführungskette ist für die Zufuhr von Verbrauchsmitteln aller Art durch Leitungen von einem festen Anschluß zu einem beweglichen Verbraucher vorgesehen. Dabei sind die Leitungen in durchgehenden Innenräumen 1 des jeweiligen Kettenglieds angeordnet. Das Kettenglied besteht allgemein aus zwei Seitenlaschen (Kettenlaschen) mit zwei Stegen.

Im vorliegenden Ausführungsbeispiel weist das Kettenglied zwei parallel zueinander verlaufende und mittels Querstegen 14, 16 miteinander verbindbare Laschen 10, 12 auf. Die Laschen 10, 12 weisen parallel zu den Querstegen verlaufende Deck- und Bodenseiten 18, 20 sowie Aufnahmen 22, 24 für die freien Enden 26, 28 der Querstege 14, 16 auf, die in den Innenwänden 8 der Seitenlaschen 10, 12 ausgebildet sind. Die Laschen 10, 12 und die Querstege 14, 16 definieren den Innenraum 1 des Kettengliedes. Die in der Deck- bzw. Bodenseite 18, 20 der Lasche 10 bzw. 12 liegende Wand-Partie 30 bzw. 32 der Aufnahme 22 bzw. 24 erstreckt sich über die Breite des entsprechenden Quersteg-Endes 26 bzw. 28. Das Ende 26 bzw. 28 stützt sich dabei an der Wand-Partie 30 bzw. 32 über seine ganze Breite ab. Ferner ist zu erkennen, daß das Ende 26 bzw. 28 mit der Aufnahme 22 bzw. 24 zumindest im Bereich der Wand-Partie 30 bzw. 32 formschlüssig verbindbar ist. Dabei entspricht die Breite der Aufnahme 22 in etwa der Breite des Endes 26. Auf diese Weise ist gewährleistet, daß die hergestellte Verbindung zwischen den Enden und der Aufnahme eine hohe Festigkeit erfährt. So lassen insbesondere die Fig. 1 und 7 erkennen, daß die Querstege 14, 16 mit den Laschen 10, 12 mittels Rastkörper verbindbar sind, die als Rastvorsprünge 36 und -ausnehmungen 38 ausgebildet sind und die Bewegungen der Querstege 14, 16 in ihrer Längsrichtung festlegen. Die Rastvorsprünge 36 sind elastisch verformbar und quer zu den Querstegen 14, 16 verschwenkbar. Dabei weist der Rastvorsprung 26 einen parallel zum Quersteg 14 bzw. 16 verlaufenden Abschnitt 40 auf, der eine in etwa senkrecht zum Quersteg 14 bzw. 16 verlaufende Nase 42 trägt. Die Nase 42 greift in eine entsprechende Ausnehmung 38 des Querstegs 14 bzw. 16 ein und stützt sich in dieser in Zugrichtung des Querstegs 14 bzw. 16 ab. Diese Ausnehmung 38 weist einen etwa senkrecht zur Längsachse 2 des Querstegs 14 bzw. 16 verlaufende Innenwand 44 auf, die mit einer hierzu parallelen Fläche 46 der Nase 42 in Druckverbindung bringbar ist. Die Fig. 7 läßt deutlich erkennen, daß der Rastvorsprung 36 innerhalb der Aufnahme 22 angeordnet ist und daß das Ende 26 eine Verjüngung 5 mit einer Stützwand 4 aufweist.

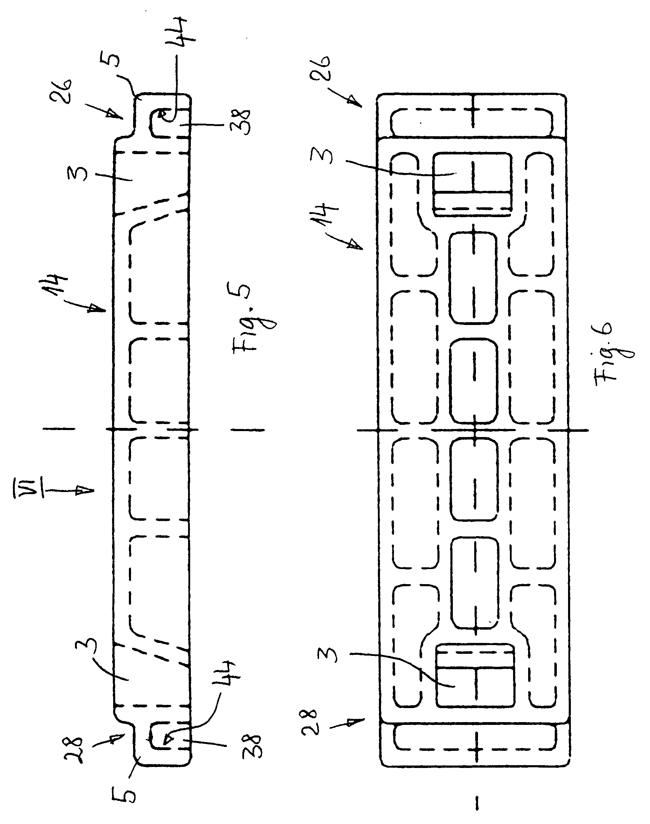

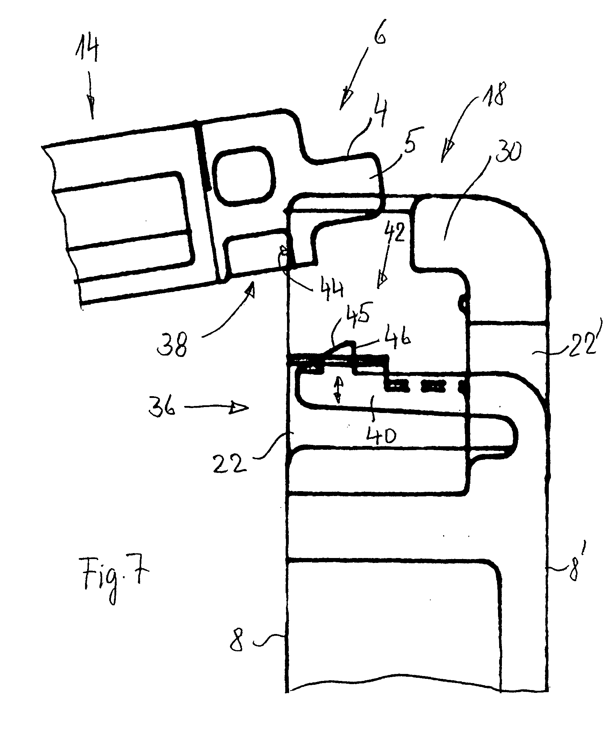

Den Fig. 5 und 6 ist zu entnehmen, daß in den Enden 26, 28 eine in die Ausnehmung 38 mündende Öffnung 3 zum Betätigen des Rastvorsprungs 36 ausgebildet ist.

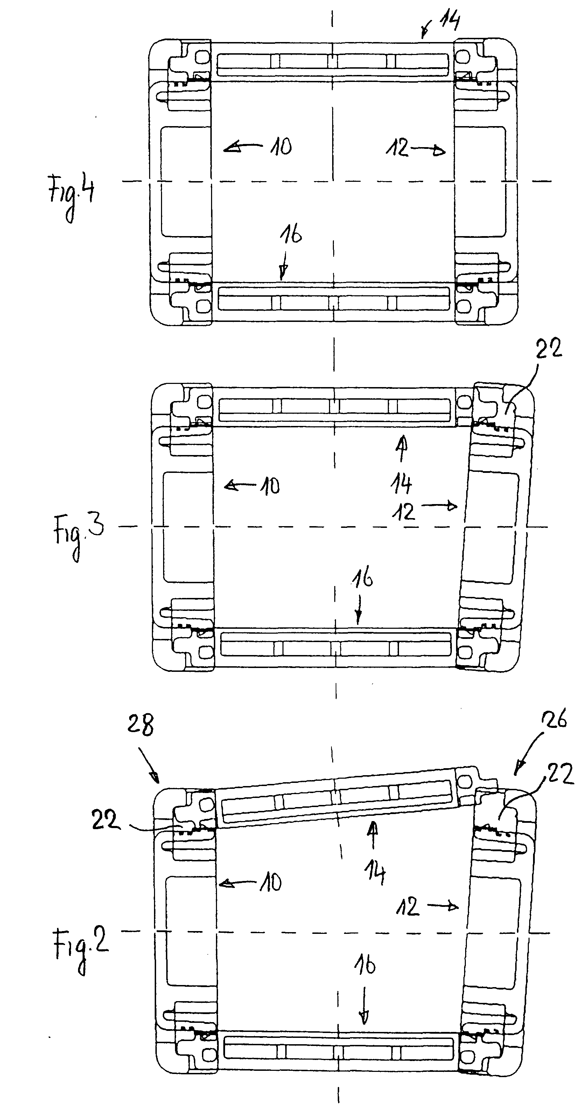

Die Fig. 1 bis 4 lassen ferner erkennen, daß die Seitenlaschen 10 und 12 sowie die Querstege 14 und 16 jeweils dieselbe Form aufweisen. Es handelt sich hier um Kunststoffteile, die miteinander baukastenartig verbindbar sind. Diese Teile können allgemein auch aus Metall bestehen. Der untere Quersteg 16 könnte allgemein mit den beiden Seitenlaschen auch einstückig ausgebildet und in Richtung Innenraum 1 konvex biegsam sein, so daß nur der obere Quersteg 8 mit den beiden Seitenlaschen 10 und 12 zu verbinden wäre. Wie der Quersteg 14 mit dem Kettenglied verbunden werden kann, zeigen die Fig. 2 bis 4. Der untere Quersteg 16 ist mit den beiden Seitenlaschen 10 und 12 in üblicher Weise und problemlos verbindbar. Daraufhin wird das in Fig. 2 linke Ende 26 in die Aufnahme 22 gesteckt. Die rechte Seitenlasche 12 wird nach rechts gebogen bzw. geschwenkt, und das rechte Ende 26 des Querstegs 14 wird in die Aufnahme 22 von oben nach unten bewegt, wie in Fig. 3 dargestellt. Hat das Ende 26 die gewünschte Position eingenommen, dann wird die Seitenlasche 12 zurück in ihre ursprüngliche entspannte Position aufgrund ihrer Eigenelastizität geschwenkt oder gedrückt, wie in Fig. 4 dargestellt. Dabei greift die Nase 42 in die Ausnehmung 8 und rastet hier ein, wobei sich die Fläche 46 an der Fläche 44 abstützt. Wie der Fig. 7 zu entnehmen ist, weist das Quersteg-Ende 26 eine Stufe 6 auf, die in eine zur Achse 2 parallele Fläche 4 ausläuft, die mit der Fläche 34 in Druckverbindung bringbar ist. Der Rastvorsprung 36, der hier in der Aufnahme 22 voll untergebracht ist, weist einen Abschnitt 40 auf, dessen freies Ende die Nase 42 trägt. In der Außenwand 8' ist eine Öffnung 22' vorgesehen, die aus spritztechnischen Gründen vorteilhaft ist.

Schließlich zeigen die Fig. 5 und 6, daß der Quersteg 14 Ausnehmungen, Vertiefungen oder Öffnungen 3 aufweist, die so positioniert sind, daß sie den Zugang zu der Rastnase 42 erleichtern. Soll der Quersteg 14 von den Seitenlaschen gelöst werden, dann kann z.B. mit einem Schraubenzieher die Rastnase 42 über die durchgehende Öffnung 3 betätigt werden. Dabei wird die schräg abfallende Fläche 45 der Nase 42 nach unten gedrückt, und die Nase 42 verläßt die Ausnehmung 38.

Die vorgeschlagenen Maßnahmen sind im wesentlichen von der Form, Größe und Gewicht der Kettenglieder unabhängig und daher praktisch immer verwirklichbar. Denn das Ausschwenken bzw. Biegen der Seitenlaschen und/oder Querstege derart, daß das noch freie Ende des zu verbindenen Quersteges in den Kettenglied-Innenraum gelangt, und zwar in den Bereich der Verbindungsmittel, kann regelmäßig ohne zusätzliches Werkzeug erfolgen. Die gewünschte Biegsamkeit mindestens eines Querstegs kann z.B. so erreicht werden, daß der Quersteg im Bereich seiner Innenwand, die dem Kettenglied-Innenraum zugewandt ist, einen Einschnitt oder eine Kerbe aufweist, so daß der Quersteg nur nach innen zu, jedoch nicht nach außen zu gebogen werden kann. Von besonderer Bedeutung für die Erfindung ist also, daß mindestens eine Lasche und/oder ein Quersteg so ausgebildet und bemessen ist, daß dadurch das freie Ende des Querstegs an der vorgesehenen Stelle positionierbar ist.

## Patentansprüche

1. Kettenglied für Energieführungsketten mit parallel zueinander verlaufenden und mittels Querstegen (14, 16) miteinander verbindbaren Laschen (10, 12) sowie mit Verbindungsmitteln (22, 24) für freie Enden (26, 28) der Querstege (14, 16), wobei diese Verbindungsmittel in den Innenwänden (8) der Laschen (10, 12) ausgebildet sind,
dadurch gekennzeichnet,
daß mindestens ein Quersteg (14) in Richtung Kettenglied-Innenraum (1) in sich elastisch biegbar und/oder mindestens eine Lasche (12) in bezug auf den mit den beiden Laschen (10, 12) bereits verbundenen Quersteg (16) nach außen hin um ein Maß verschwenkbar oder in sich biegbar ist, das eine Positionierung des einen freien Endes (26) des noch zu verbindenden Querstegs (14) vor der Lascheninnenwand (8) mit dem zugeordneten Verbindungsmittel erlaubt.

2. Kettenglied nach Anspruch 1,
dadurch gekennzeichnet,
daß die Verbindungsmittel (22,24) als Aufnahmen, Ausnehmungen oder Vorsprünge ausgebildet sind, die mit den Enden (26,28) verbindbar sind.

3. Kettenglied nach einem der Ansprüche 1 oder 2,
dadurch gekennzeichnet,
daß die Enden (26,28) entsprechende Ausnehmungen besitzen, die mit den Vorsprüngen der Laschen verbindbar sind.

4. Kettenglied nach einem der Ansprüche 1 bis 3 mit etwa parallel zu den Querstegen (14,16) verlaufenden Deck- und Bodenseiten,
dadurch gekennzeichnet,
daß die in der Deck- oder Bodenseite (18,20) der Lasche (10,12) liegende Wand-Partie (30,32) der Aufnahme (22,24) sich über die Breite des entsprechenden Endes (26,28) erstreckt.

5. Kettenglied nach einem der Ansprüche 1 bis 4,
dadurch gekennzeichnet,
daß das Quersteg-Ende (26, 28) sich an der Wand-Partie (30, 32) über die ganze Breite abstützt.

6. Kettenglied nach einem der Ansprüche 1 bis 5,
dadurch gekennzeichnet,
daß das Quersteg-Ende (26, 28) mit der Aufnahme (22, 24) zumindest im Bereich der Wand-Partie (30, 32) formschlüssig verbindbar ist.

7. Kettenglied nach einem der Ansprüche 1 bis 6,
dadurch gekennzeichnet,
daß die Breite der Aufnahme (22) in etwa der Breite des Quersteg-Endes (26) entspricht.

8. Kettenglied nach einem der Ansprüche 1 bis 7,
dadurch gekennzeichnet,
daß der Quersteg (14, 16) mit der Lasche (10, 12) mittels Rastkörper verbindbar ist.

9. Kettenglied nach Anspruch 8,
dadurch gekennzeichnet,
daß die Rastkörper als Rastvorsprünge (36) oder -ausnehmungen (38) ausgebildet sind und die Bewegung des Quersteges (14, 16) in seiner Längsrichtung festlegen.

10. Kettenglied nach einem der Ansprüche 1 bis 9,
dadurch gekennzeichnet,
daß die Rastvorsprünge (36) elastisch verformbar und quer zu den Querstegen (14, 16) verschwenkbar sind.

11. Kettenglied nach einem der Ansprüche 1 bis 10,
dadurch gekennzeichnet,
daß der Rastvorsprung (36) einen parallel zum Quersteg (14, 16) verlaufenden Abschnitt (40) aufweist, der eine in etwa senkrecht zum Quersteg (14, 16) verlaufende Nase (42) trägt.

12. Kettenglied nach Anspruch 11,
dadurch gekennzeichnet,
daß die Nase (42) in eine entsprechende Ausnehmung (38) des Querstegs (14, 16) eingreift und sich in dieser in Zugrichtung des Querstegs (14, 16) abstützt.

13. Kettenglied nach einem der Ansprüche 1 bis 12,
dadurch gekennzeichnet,
daß die Ausnehmung (38) eine in etwa senkrecht zur Längsachse (2) des Querstegs (14, 16) verlaufende Innenwand (44) aufweist, die mit einer hierzu parallelen Fläche (46) der Nase (42) in Druckverbindung bringbar ist.

14. Kettenglied nach einem der Ansprüche 1 bis 13,
dadurch gekennzeichnet,
daß der Rastvorsprung (36) innerhalb der Aufnahme (22) angeordnet ist.

15. Kettenglied nach einem der Ansprüche 1 bis 14,
dadurch gekennzeichnet,
daß das Quersteg-Ende (26, 28) eine Verjüngung (5) mit einer Stützwand (4) aufweist.

16. Kettenglied nach einem der Ansprüche 1 bis 15,
dadurch gekennzeichnet,
daß im Quersteg-Ende (26, 28) eine in die Ausnehmung (38) mündende Öffnung (3) zum Betätigen des Rastvorsprunges (36) ausgebildet ist.

## Claims

1. Chain link for power transmitting chains, having sidebars (10, 12), which extend parallel to one another and are interconnectable by means of transverse webs (14, 16), as well as having connecting means (22, 24) for free ends (26, 28) of the transverse webs (14, 16), these connecting means being provided in the internal walls (8) of the sidebars (10, 12), characterised in that at least one transverse web (14) is resiliently bendable per se in the direction towards the chain link interior (1) and/or at least one sidebar (12) is outwardly pivotable or is bendable per se relative to the transverse web (16), which is already connected to the two sidebars (10, 12), by a dimension which permits the one free end (26) of the transverse web (14), which is still to be connected, to be positioned in front of the internal sidebar wall (8) provided with the associated connecting means.

2. Chain link according to claim 1, characterised in that the connecting means (22, 24) are configured as receivers, recesses or projections, which are connectable to the ends (26, 28).

3. Chain link according to one of claims 1 or 2, characterised in that the ends (26, 28) have corresponding recesses which are connectable to the projections of the sidebars.

4. Chain link according to one of claims 1 to 3, having top and bottom sides which extend substantially parallel to the transverse webs (14, 16), characterised in that the wall portion (30, 32) of the receiver (22, 24), situated in the top or bottom side (18, 20) of the sidebar (10, 12), extends over the width of the corresponding end (26, 28).

5. Chain link according to one of claims 1 to 4, characterised in that the transverse web end (26, 28) is supported on the wall portion (30, 32) over the entire width.

6. Chain link according to one of claims 1 to 5, characterised in that the transverse web end (26, 28) is connectable to the receiver (22, 24) in a form-locking manner, at least in the region of the wall portion (30, 32).

7. Chain link according to one of claims 1 to 6, characterised in that the width of the receiver (22) corresponds substantially to the width of the transverse web end (26).

8. Chain link according to one of claims 1 to 7, characterised in that the transverse web (14, 16) is connectable to the sidebar (10, 12) by means of locking bodies.

9. Chain link according to claim 8, characterised in that the locking bodies are configured as locking projections (36) or locking recesses (38) and determine the movement of the transverse web (14, 16) in its longitudinal direction.

10. Chain link according to one of claims 1 to 9, characterised in that the locking projections (36) are resiliently deformable and are pivotable transversely relative to the transverse webs (14, 16).

11. Chain link according to one of claims 1 to 10, characterised in that the locking projection (36) has a portion (40), which extends parallel to the transverse web (14, 16) and carries a projection member (42), which extends substantially perpendicularly relative to the transverse web (14, 16).

12. Chain link according to claim 11, characterised in that the projection member (42) engages in a corresponding recess (38) of the transverse web (14, 16) and is supported in said recess in the tensile direction of the transverse web (14, 16).

13. Chain link according to one of claims 1 to 12, characterised in that the recess (38) has an internal wall (44), which extends substantially perpendicularly relative to the longitudinal axis (2) of the transverse web (14, 16), and which internal wall can be brought into pressure connection with a face (46), parallel to said wall, of the projection member (42).

14. Chain link according to one of claims 1 to 13, characterised in that the locking projection (36) is disposed internally of the receiver (22).

15. Chain link according to one of claims 1 to 14, characterised in that the transverse web end (26, 28) has a tapering portion (5) with a supporting wall (4).

16. Chain link according to one of claims 1 to 15, characterised in that an opening (3), which terminates in the recess (38), is provided in the transverse web end (26, 28) to actuate the locking projection (36).

## Revendications

1. Section de réseau pour chaînes conductrices d'énergie avec des barres de liaison (10, 12) s'étendant parallèlement les unes aux autres et pouvant être reliées par des étais transversaux (14, 16) ainsi qu'avec des moyens de connexion (22, 24) pour les extrémités libres (26, 28) des étais transversaux (14, 16), ces moyens de connexion étant réalisés dans les parois internes (8) des barres de liaison (10, 12), caractérisée en ce que
au moins un étai transversal (14) est flexible de façon élastique en soi dans la direction de l'intérieur de la section de réseau (1) et/ou au moins une barre de liaison (12) peut pivoter d'une certaine quantité vers l'extérieur par rapport à l'étai transversal (16) déjà relié aux deux barres de liaison (10, 12) ou est flexible en soi, ce qui permet de positionner une extrémité libre (26) de l'étai transversal (14) restant à connecter devant la paroi interne de la barre de liaison (8) avec les moyens de connexion associés.

2. Section de réseau selon la revendication 1, caractérisée en ce que
les moyens de connexion (22, 24) peuvent être réalisés sous forme de logements, de creux ou de saillies qui peuvent être reliés aux extrémités (26, 28).

3. Section de réseau selon l'une quelconque des revendications 1 ou 2, caractérisée en ce que
les extrémités (26, 28) possèdent des creux correspondants qui peuvent être reliés avec les saillies des barres de liaison.

4. Section de réseau selon l'une quelconque des revendications 1 à 3 avec des faces de couvercle et de fond s'étendant à peu près parallèlement aux étais transversaux (14, 16), caractérisée en ce que
la partie de paroi (30, 32) du logement (22, 24) située dans la face de couvercle ou de fond (18, 20) de la barre de liaison (10, 12) s'étend sur la largeur de l'extrémité correspondante (26, 28).

5. Section de réseau selon l'une quelconque des revendications 1 à 4, caractérisée en ce que
l'extrémité (26, 28) d'étai transversal prend appui sur toute la largeur de la partie de paroi (30, 32).

6. Section de réseau selon l'une quelconque des revendications 1 à 5, caractérisée en ce que
l'extrémité (26, 28) d'étai transversal peut être reliée au logement (22, 24) en engagement positif au moins au niveau de la partie de paroi (30, 32).

7. Section de réseau selon l'une quelconque des revendications 1 à 6, caractérisée en ce que
la largeur du logement (22) correspond approximativement à la largeur de l'extrémité d'étai transversal (26).

8. Section de réseau selon l'une quelconque des revendications 1 à 7, caractérisée en ce que
l'étai transversal (14, 16) peut être relié à la barre de liaison (10, 12) au moyen d'éléments d'arrêt.

9. Section de réseau selon la revendication 8, caractérisée en ce que
les éléments d'arrêt sont réalisés sous forme de saillies (36) ou de creux (38) d'arrêt et déterminent le déplacement de l'étai transversal (14, 16) dans sa direction longitudinale.

10. Section de réseau selon l'une quelconque des revendications 1 à 9, caractérisée en ce que
les saillies d'arrêt (36) peuvent se déformer de façon élastique et peuvent pivoter transversalement par rapport aux étais transversaux (14, 16).

11. Section de réseau selon l'une quelconque des revendications 1 à 10, caractérisée en ce que
la saillie d'arrêt (36) présente une section (40) s'étendant parallèlement à l'étai transversal (14, 16) qui supporte un tenon (42) s'étendant à peu près verticalement par rapport à l'étai transversal (14, 16).

12. Section de réseau selon la revendication 11, caractérisée en ce que
le tenon (42) s'enclenche dans un creux correspondant (38) de l'étai transversal (14, 16) et y prend appui dans la direction de traction de l'étai transversal (14, 16).

13. Section de réseau selon l'une quelconque des revendications 1 à 12, caractérisée en ce que
le creux (38) présente une paroi interne s'étendant à peu près verticalement par rapport à l'axe longitudinal (2) de l'étai transversal (14, 16), laquelle peut être amenée dans une connexion par pression avec une surface (46) du tenon (42) parallèle à celle-ci.

14. Section de réseau selon l'une quelconque des revendications 1 à 13, caractérisée en ce que
la saillie d'arrêt (36) est disposée à l'intérieur du logement (22).

15. Section de réseau selon l'une quelconque des revendications 1 à 14, caractérisée en ce que
l'extrémité (26, 28) d'étai transversal présente un étranglement (5) avec une paroi de support (4).

16. Section de réseau selon l'une quelconque des revendications 1 à 15, caractérisée en ce que
dans l'extrémité (26, 28) d'étai transversal, un orifice (3) donnant sur le creux (38) est réalisé pour actionner la saillie d'arrêt (36).
